# EUROPÄISCHE PATENTSCHRIFT

(11) **EP 0 569 621 B1**
(45) Veröffentlichungstag und Bekanntmachung des Hinweises auf die Patenterteilung: **10.01.1996**
(21) Anmeldenummer: 92120872.4
(22) Anmeldetag: 08.12.1992
(51) Int. Cl.: C08L 53/00

(54) **Verwendung eines Zusatzes von vernetzten PP-EPDM-Mischungen zur Kraftfahrzeugfolienherstellung**
Use of cured PP-EPDM mixtures as additive for preparing foils for automotive vehicle
Emploi de mélanges réticules PP-EPDM comme additif pour la production de feuilles pour véhicule automobile

(30) Priorität: 30.04.1992 DE 4214170
(43) Veröffentlichungstag der Anmeldung: 18.11.1993
(73) Patentinhaber: ALKOR GMBH KUNSTSTOFFE, D-81451 München (DE)
(72) Erfinder: Dous, Eberhardt, Dipl.-Ing., W-8031 Wörthsee (DE); Fink, Roland, Dipl.-Ing., W-8130 Starnberg (DE); Mathavan, Thambirajah, Dipl.-Ing., W-8000 München 50 (DE)

(56) Entgegenhaltungen:
- EP-A- 0 361 205
- FR-A- 2 122 965
- US-A- 5 045 589

## Beschreibung

Die vorliegende Erfindung betrifft die Verwendung eines Zusatzes von vernetzten PP-EPDM-Mischungen oder Legierungen als Zusatzmittel in bestimmten Gewichtsmengen zu einem Kunststoff oder Kunststoffen auf der Basis von Polyolefin, der bzw. die mindestens ein unvernetztes heterophasiges Propylen-Blockcopolymerisat mit einem bestimmten Elastomeranteil enthält bzw. enthalten oder daraus besteht bzw. bestehen, gegebenenfalls in Kombination mit Verarbeitungshilfs-, Zusatzmitteln, Füllstoffen, Farbstoffen und/oder Farbpigmenten zur Herstellung von tiefziehfähigen Kraftfahrzeugfolien, -bahnen oder Kraftfahrzeugfolienschichten mit einer matten und/oder geprägten Folienoberfläche oder Folienoberflächenschicht.

Die grundlegenden Eigenschaften für bestimmte Polyolefine sind seit langem bekannt. Da sowohl Polyethylen als auch Polypropylen und Ethylen-Propylen-Mischungen bestimmte Vor- und Nachteile aufweisen, hat man versucht die Eigenschaften von Polypropylen und/oder Polyethylen durch Verwendung der unterschiedlichsten Zusätze, Kunststoffmischungen und dergleichen zu verbessern, die jedoch häufig Vor- und Nachteile miteinander verknüpfen bzw. verbinden.

Da Kunststoffolien auf der Basis von Polyolefinen -sofern sie keine entsprechende Nachbehandlung durch Lackierung mit einem Mattlack und dergleichen unterworfen werden- meist eine glänzende oder speckig glänzende Oberfläche aufweisen, besteht auch ein Ziel der Verbesserung von Kunststoffolienoberflächen darin, Kunststoffolien und daraus thermogeformte Formteile mit gleichmäßiger matter Oberfläche herzustellen.

Die bisher bekannten Verfahren zur Mattierung von flexiblen PP-EP- oder PP-EPDM-Zusammensetzungen mit mineralischen Füllstoffen, z. B. Talkum, bewirken eine Zunahme der Steifigkeit und eine Verschlechterung des Alterungsverhaltens. Außerdem wird der Matteffekt vom Verformungsgrad stark beeinflußt. Auch die Verwendung von Elastomeren Partikeln in Gummimischungen (vergleiche u. a. EP-B-0257242) sind nicht geeignet.

Andere Möglichkeiten der Mattierung von Kunststoffolienoberflächen mit Mattlacken sind nicht zur Herstellung von Tiefziehfolien geeignet oder geben nach dem Prägen keine gleichmäßigen Strukturen mit Matteffekten.

Besondere Anforderungen an Kunststoffolien werden zur Herstellung tiefziehfähiger Kraftfahrzeugfolien, -bahnen oder Kraftfahrzeugfolienschichten gestellt, da die Formteile unterschiedliche Formen, zum Teil mit Hinterschnitten nach der Formung aufweisen, so daß auch unterschiedliche Tiefziehverhältnisse am gleichen Formteil eingehalten werden müssen. Trotzdem soll das Formteil an allen Stellen die gleiche Prägestruktur und Mattigkeit aufweisen. Andererseits werden besondere Anforderungen an die Kratzfestigkeit der Kunststoffoberflächen, Fogwerte, die Alterungsstabilität und dergleichen gestellt.

Ziel und Aufgabe der vorliegenden Erfindung war es daher eine Kunststoffmischung oder einen Zusatz zu einer Kunststoffmischung zu finden, der die Eigenschaften von Propylenpolymerisaten so verbessert, daß diese mit besonderen Vorteilen auch für Kraftfahrzeugfolien anwendbar sind. So sollte insbesondere die Oberfläche der Folie verbesserte Eigenschaften, insbesondere eine Mattigkeit, aufweisen, die weitgehend unabhängig von der Verformungstemperatur und dem Verformungsgrad, d.h. an allen Stellen des Formteiles gleichmäßig erhalten bleibt. Die Tiefziehfähigkeit der Folie sollte den Anforderungen an Tiefziehfolien im Kraftfahrzeugfoliensektor für Innenverkleidungen entsprechen. Weiterhin sollte die Alterungsstabilität z.B. gegenüber ABS-Folien besser sein.

Erfindungsgemäß wurde festgestellt, daß diesen Zielen und Aufgaben die Verwendung eines Zusatzes von vernetzten PP-EPDM-Mischungen oder Legierungen als Zusatzmittel zu Kunststoff oder Kunststoffen auf der Basis von Polyolefin gerecht wird.

Die Verwendung eines Zusatzes von dynamisch vernetzten oder teilvernetzten PP-EPDM-Mischungen oder Legierungen als Zusatzmittel erfolgt dabei in Gewichtsmengen von 20 bis 80 Gew.-Teilen (bezogen auf 100 Gew.-Teile Kunststoff) zu 80 bis 20 Gew.-Teilen Kunststoff auf der Basis von Polyolefin, der mindestens ein unvernetztes heterophasiges Propylen-Blockcopolymerisat mit einem Elastomeranteil von 35 bis 75 Gew.-% (bezogen auf 100 Gew.-Teile des unvernetzten heterophasigen Propylen-Blockcopolymerisat) enthält, gegebenenfalls in Kombination mit Verarbeitungshilfs-, Zusatzmitteln, Füllstoffen, Farbstoffen und/oder Farbpigmenten, zur Herstellung von tiefziehfähigen Kraftfahrzeugfolien, -bahnen oder Kraftfahrzeugfolienschichten mit einer matten und/oder geprägten Folienoberfläche oder Folienoberflächenschicht.

Der Polypropylen-Block des unvernetzten heterophasigen Polypropylen-Blockpolymerisates besteht vorzugsweise aus einem Propylenhomo-, -co- und/oder -blockpolymerisat. Der Elastomeranteil des heterophasigen Polypropylen-Blockcopolymerisats beträgt nach einer vorzugsweisen Ausführungsform 40 - 70 Gew.-% (bezogen auf 100 Gew.- Teile des unvernetzten heterophasigen Propylen-Blockcopolymerisats).

Bei der erfindungsgemäßen Folie oder dem erfindungsgemäßen Zusatz wird eine flexible tiefziehfähige Kraftfahrzeugfolie oder -bahn erhalten, die für die Herstellung thermoverformter Formteile mit gleichmäßig matter Oberfläche für Kraftfahrzeugfolien für Innenverkleidungen besonders gut geeignet ist. Die Mattigkeit dieser Folie ist weitgehend unabhängig von der Verformungstemperatur und dem Verformungsgrad, d. h. an allen Stellen des Formteiles ist gleiche oder annähernd gleiche Mattigkeit der Folienoberfläche oder des daraus hergestellten thermogeformten Formteiles gegeben.

Nach einer bevorzugten Ausführungsform besitzt das Elastomer des Ethylen-Propylen-Copolymerisates, einen Ethylenanteil von 20 bis 70 Gew.-%, vorzugsweise 30 bis 60 Gew.-%, und einen Propylenanteil von 80 bis 30 Gew.-%, vorzugsweise 70 bis 40 Gew.-%, und weist ein Molekulargewicht größer als 100.000, vorzugsweise größer als 150.000, auf.

Der Zusatz eines dynamisch vernetzten PP-EPDM-Blends mit einer Teilchengröße der vernetzten Elastomerphase von 0,5 bis 15 µm verbessert den Verformungsbereich, die Gleichmäßigkeit der Wärmedehnung und das Narbbild. Ein verbessertes Narbbild bedeutet, daß die überproportionale Verdehnung der Narbtäler durch die mit zunehmender Dehnung ansteigende Festigkeit begrenzt wird (strain hardening). Um diesen Effekt zu erreichen, ist eine homogene Einarbeitung der vernetzten PP-EPDM-Blends und eine partikelförmige Elastomerstruktur notwendig. Daraus resultieren gewisse Anforderungen an den Vernetzungsgrad und den Schmelzindex der verwendeten vernetzten PP-EPDM-Blends. Der Vernetzungsgrad bei den komplexen Systemen, indirekt definiert durch den Kompressionsset bei 70 °C nach 22 Stunden (DIN 53517), soll zwischen 25 und 60 °C liegen.

Als heterophasiges Propylen-Blockpolymerisat wird vorzugsweise ein Blockpolymerisat mit einem MFI 230/2,16 von 0,3 bis 8, vorzugsweise 0,5 bis 7g/10 min, verwendet.

Als vernetztes PP-EPDM, vorzugsweise dynamisch vernetztes oder teilvernetztes PP-EPDM, werden bevorzugt solche mit einer Dichte zwischen 0,78 bis 0,96 g/cm³, vorzugsweise 0,83 bis 0,93 g/cm³ angesetzt. Bevorzugt weist das PP-EPDM, das dafür ausgewählt wird, einen Biegemodul (Initial flexural modulus) - gemessen nach ASTM D 790 mit einer 2 mm dicken Folienbahn - von 8 bis 40 MPa (80 bis 400 kg/cm), vorzugsweise 10 bis 30 MPa (100 bis 300 kg/cm), auf.

Die aus diesen Blends hergestellten Folien besitzen einen Glanzgrad nach DIN 57530/60° von 0,5 bis 5, der weder von der erforderlichen Verformungstemperatur noch von dem Tiefziehverhältnis wesentlich beeinflußt wird. Dieses Merkmal unterscheidet also die erfindungsgemäßen Folien von den nach bisherigen Erfahrungen gesammelten Erkenntnissen mit Folien, die durch Füllstoffe oder Prägung mattiert wurden.

Unter Verwendung des erfindungsgemäßen Zusatzes bzw. der erfindungsgemäßen Mischung zur Herstellung von tiefziehfähigen Kraftfahrzeugfolien gelingt es, Kunststoffolien mit einer matten Oberfläche und hohen Elastizität für die Thermoverformung zu erhalten. Dabei kann die Thermoverformung mit dem erfindungsgemäßen Zusatz bzw. der erfindungsgemäßen Mischung in einem breiten Temperaturintervall von 140 bis 200 °C, vorzugsweise 150 bis 185 °C durchgeführt werden ohne daß besondere Schwierigkeiten auftreten. Die Folie ist ausgezeichnet tiefziehfähig und sowohl im Positivtiefziehverfahren als auch im Negativtiefziehverfahren einsetzbar. Unter Verwendung der Zusammensetzung gelingt es, Tiefziehfolien mit einer Shore D Härte von 25 bis 60, vorzugsweise 30 bis 55 und einen Glanzgrad nach Gardner 60 °C von 0,5 bis 1,5, gemessen am tiefgezogenen Formteil, zu erhalten.

Die unter Verwendung des Zusatzes bzw. der Mischung hergestellten Kraftfahrzeugfolienbahnen für die Innenverkleidung haben darüberhinaus den Vorteil der hohen Alterungsstabilität gegen Licht und Wärme sowie geringe Fog-Werte.

Die erfindungsgemäße Kunststoffmischung (unter Mitverwendung des Zusatzes) weist bevorzugt einen Füllstoffgehalt von 0 bis 30 Gewichtsanteilen oder 0 bis 20 Gewichtsanteilen (bezogen auf 100 Gewichtsanteile Kunststoff) auf. Als Füllstoffe können die an sich bekannten Füllstoffe, vorzugsweise Talkum und/oder SiO2 mit einer mittleren Teilchengröße von 0,01 bis 20 µm, vorzugsweise 0,05 bis 10 µm eingesetzt werden.

Als Verarbeitungshilfsmittel werden u.a. vorzugsweise Wärme- und/oder Lichtstabilisatoren für Polyolefine eingesetzt.

Als weitere Verarbeitungshilfsmittel oder Zusatzmittel werden u.a. Gleitmittel oder Gleitmittelgemische verwendet.

Die erfindungsgemäße Folie unter Verwendung der Mischung kann sowohl als Monofolie als auch als Mehrschichtfolie eingesetzt werden. Bei einer Mehrschichtfolie wird die erfindungsgemäße Folie oder Folienschicht als obere oder eine der oberen Schichten eingesetzt, während die anderen Schichten keinen Zusatz an vernetztem PP-EPDM Blend enthalten, oder eine andere Zusammensetzung aufweisen. Unterhalb der Folienschicht ist vorzugsweise eine Haftvermittlerschicht angeordnet. Die Haftvermittlerschicht besteht vorzugsweise aus Acrylaten, Polyurethan oder Acrylat-Polyurethan-Mischungen oder enthält diese. Unterhalb der Folienschicht oder Haftvermittlerschicht ist vorzugsweise eine Schaumschicht, eine Trägerschicht, eine Gewebeschicht und/oder Stützschicht angeordnet. Die Schaumschicht enthält vorzugsweise einen Polyolefinschaum, oder einen Polyurethanschaum oder besteht daraus.

Bevorzugt wird die Folie in einer Dicke von 300 µm bis 2.000 µm, vorzugsweise 400 µm bis 1.600 µm, hergestellt oder verwendet. Die Folie wird zweckmäßig bei Temperaturen von 140 bis 200 °C, vorzugsweise 150 bis 185 °C, einem Tiefziehvorgang unterworfen.

Nach einer anderen bevorzugten Ausführungsform ist die erfindungsgemäß zusammengesetzte Folie entweder als Monofolie ausgebildet oder als Oberfolie oder eine andere der oberen Folienschichten unter Verwendung einer oder mehreren Zwischenschichten oder Unterschichten und/oder Haftschichten angeordnet.

Die Erfindung betrifft weiterhin einen Verbundwerkstoff für Kraftfahrzeuginnenverkleidungen oder als Kraftfahrzeugteile im Innenraum von Kraftfahrzeugen, der eine ein- oder mehrschichtige polyolefinhaltige Folie oder Schicht von einer mittleren Schichtdicke oder Folienstärke von 300 bis 2.000 µm und mindestens einer unmittelbar darunter oder unter Einschaltung von Zwischenschichten eingeordneten Schaumschicht, Trägerschicht, Stützschicht, Gitter und/oder Gewebeschicht. Gemäß der Erfindung besitzt die polyolefinhaltige Folie (1) oder Schicht als obere oder eine der oberen Schichten eine Polypropylen und EPDM enthaltende Folie oder Schicht oder besteht daraus, die mindestens eine vernetzte PP-EPDM-Mischung oder Legierung in Gewichtsmengen von 20 bis 80 Gew.-Teilen (bezogen auf 100 Gew.-Teile Kunststoff) und 80 bis 20 Gew.-Teile mindestens eines Kunststoffes auf der Basis von Polyolefin, der mindestens ein unvernetztes heterophasiges Propylen-Blockcopolymerisat mit einem Elastomeranteil von 35 bis 75 Gew.-% (bezogen auf 100 Gew.-Teile des unvernetzten heterophasigen Propylen-Blockcopolymerisates) enthält, wobei die Folie oder Schicht gegebenenfalls Verarbeitungshilfs-, Füllstoffe, Farbstoffe, und/oder Farbpigmente oder andere Zusatzmittel enthält.

Die erfindungsgemäße Folie oder Schicht (1), die vernetztes PP-EPDM und unvernetztes heterophasiges Propylenblockcopolymerisat mit Elastomeranteil enthält, ist vorzugsweise kombiniert mit mindestens einer Polyolefinschicht oder Polyolefinfolie (2), die kein vernetztes PP-EPDM oder dieses in Gewichtsmengen unter 8 Gew.-%, vorzugsweise unter 4 Gew.-% und somit die üblichen Polyolefine, neben gegebenenfalls Hilfs-, Verarbeitungsmitteln, Zusatzmitteln und dergleichen enthält. Nach einer bevorzugten Ausführungsform wird sowohl die Folie oder Schicht (1) als auch die Folie oder Schicht (2) im Koextrusionsverfahren hergestellt.

Die Folie (1) oder die Folie in Kombination mit einer weiteren Polyolefinfolie (2) oder mehreren weiteren Polyolefinfolien, ist sehr gut thermoverformbar und dient zur Herstellung spannungsarmer Formteile mit genauer Wiedergabe oder Reproduktion von form- oder temperaturstabilen Oberflächenstrukturierungen. Die Folie wird vorzugsweise im Positivtiefziehverfahren und/oder Negativtiefziehverfahren bearbeitet bzw. verarbeitet. Der unter Verwendung der Folie oder Schicht (1) oder der Folie oder Schicht (1) in Kombination mit mindestens einer weiteren Polyolefinschicht oder Polyolefinfolie (2) hergestellte Verbundwerkstoff, weist vorzugsweise eine Schaumschicht, z.B. Polyurethanschaum, vorzugsweise jedoch Polyolefinschaum auf und/oder ist mit einer Trägerschicht bzw. einem Träger und/oder einer Stützschicht und/oder einer Gitter- oder Gewebeschicht versehen. Nach einer bevorzugten Ausführungsform ist auf die Folie eine Polyolefin-Schaumbahn mit einem Raumgewicht von 20 bis 200g/l und einer mittleren Dicke von 1 bis 5 mm aufkaschiert. Die Folie oder Schicht (1) wird nach einer weiteren bevorzugten Ausführungsform mit Dekorgebungen, Narbungen, Prägungen versehen, ist narbbeständig, griffreundlich und kann bedruckt werden. Unter Verwendung der erfindungsgemäßen Folie (1) oder Kombinationsfolie (1 und 2) gelingt es Formteile oder Gegenstände herzustellen, deren Oberfläche eine gute Narbstabilität auch bei Wärmelagerung aufweisen. Die unter Verwendung der erfindungsgemäßen Folie oder Schicht (1) allein oder in Kombination mit mindestens einer weiteren Polyolefinschicht oder Folie (2) herstellten Gegenstände, Formkörper, Teile, die vorzugsweise eine Schaumschicht, Trägerschicht oder einen Träger, Stützschicht und/oder eine Gitter- oder Gewebeschicht enthalten, werden bevorzugt für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge eingesetzt.

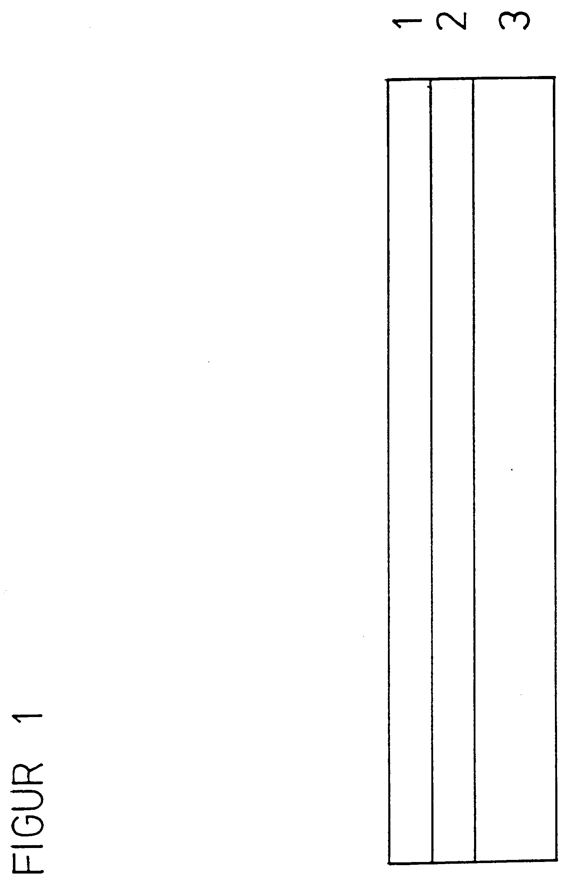

In den beigefügten Figuren 1 bis 5 sind Ausführungsbeispiele des erfindungsgemäßen Verbundwerkstoffes bzw. der erfindungsgemäßen Folie schematisch im Querschnitt dargestellt.

In Figur 1 ist die vernetzte PP-EPDM und unvernetzte heterophasiges Propylen-Blockcopolymerisat mit Elastomeranteil enthaltende Folie (1) oder Schicht (1) dargestellt. Diese Schicht (1) bzw. Folie (1) ist vorzugsweise kombiniert mit mindestens einer Polyolefinschicht oder Polyolefinfolie (2), die kein vernetztes PP-EPDM enthält oder diese in Gewichtsmengen unter 8 Gew.-%, vorzugsweise unter 4 Gew.-% enthält. Über Ziffer (3) ist eine Schaumschicht, z.B. Polyurethanschaum, vorzugsweise jedoch Polyolefinschaum und/oder eine Trägerschicht bzw. ein Träger oder eine Stützschicht und/oder eine Gitter- oder Gewebeschicht angeordnet.

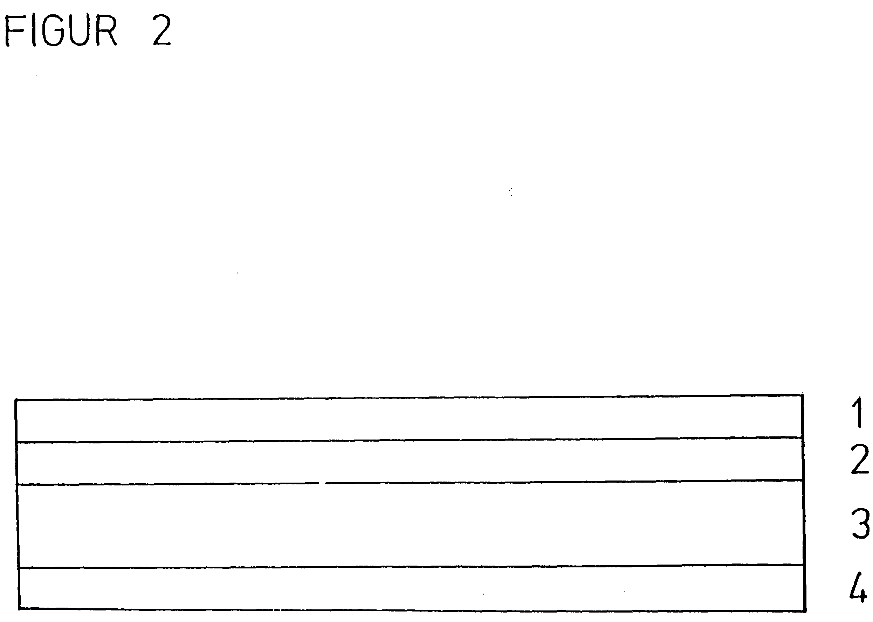

In Figur 2 ist der Verbundwerkstoff hinsichtlich der Schichten bzw. Folien (1) und (2) wie in Figur 1 aufgebaut, nur daß die Polyolefinschaumschicht (3) ganz oder teilweise auf einem Träger oder einer Trägerschicht (4) angeordnet ist.

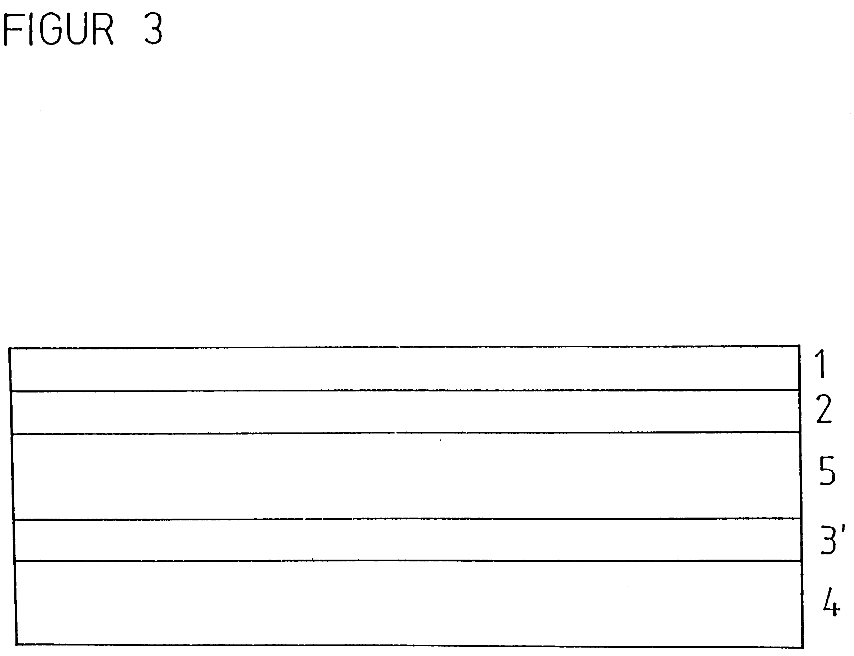

In Figur 3 ist der Verbundwerkstoff hinsichtlich der Schichten (1) und (2) oder Folien (1) und (2) wie in Figur 1 aufgebaut, jedoch ist unterhalb der Polyolefinschicht oder Folie (2) eine Zwischenschicht, Klebstoffschicht und/oder Haftschicht (5) angeordnet, die mit einer Schaumschicht (3') und/oder Vlies, einem Stützgewebe oder Stützgitter in Verbindung steht und unmittelbar oder über mindestens eine Zwischenschicht oder Klebeschicht oder Haftschicht mit einem Träger (4) verbunden ist.

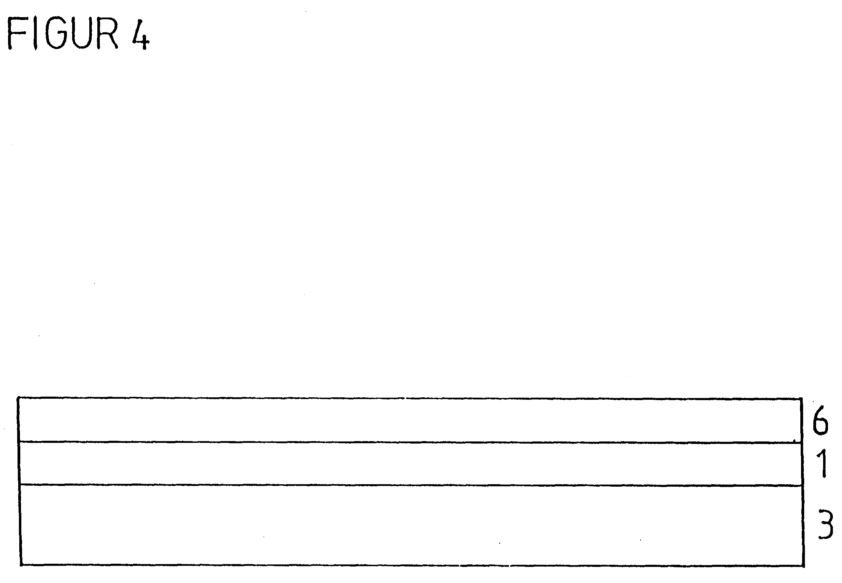

In der Figur 4 ist oberhalb der erfindungsgemäßen Schicht oder Folie (1) eine Schutzschicht (6) oder eine Lackschicht angeordnet.

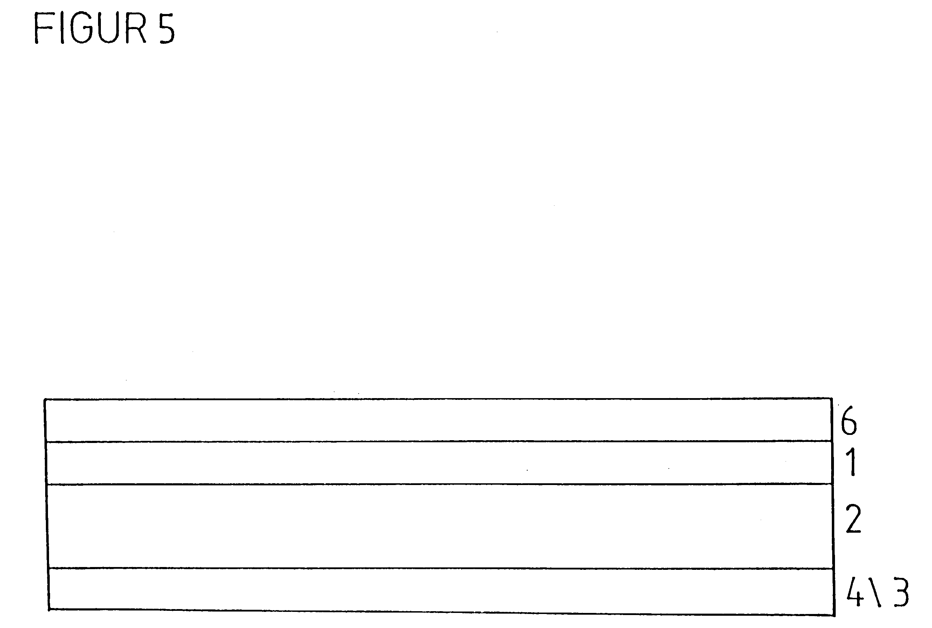

Der Verbundwerkstoff nach Figur 5 entspricht dem Verbundwerkstoff nach Figur 4, nur das die unterhalb der erfindungsgemäß vernetzten PP-EPDM und PP-Blockcopolymerisat (mit Elastomeranteil) enthaltenden Schicht (1) eine weitere Polyolefinschicht (2), die nach einer Ausführungsform mit der Schicht (1) koextrudiert ist, angeordnet ist. Unterhalb der Schicht oder Folie 2 ist eine Schaumschicht, Trägerschicht, Stützschicht, ein Vlies und/oder eine Gewebeschicht (4/3) angeordnet.

### Beispiele

### Beispiel 1

Eine Mischung aus 70 Gew.-Teilen eines unvernetzten heterophasigen Polypropylen-Blockpolymeren mit einem Elastomeranteil von 50 Gew.-%, davon 25 Gew.-% Ethylen und 25 Gew.-% Propylen und einem MFI 230/2,16 von 0,9 g/10 min und ein dynamisch vernetztes EPDM-Blend mit einem elastomeren Anteil von 70 Gew.-% mit einer Partikelgröße von 0,5 - 15 µm, einem MFI 230/10 von 15g/10 min und einem Kompressionsset nach DIN 53517 bei 70 °C nach 22h von 53, einschließlich Stabilisator und Füllstoffe wurde auf einer Doppelschnecke bei 240 °C granuliert. Die Folie von 1,50 mm Dicke wird über eine Breitschlitzdüse bei 240 °C Massetemperatur extrudiert und anschließend unter üblichen Bedingungen geprägt (und gegebenenfalls lackiert).

### An dieser Folie wurden folgende Eigenschaften gemessen nach DIN 52910:

| | | |
|---|---|---|
| Zugfestigkeit σ | 9 MPa längs / 6 MPa quer | Härte-Shore D 36 |
| Dehnung ε | 500 % längs / 470 % quer | |
| E-Modul ( 100 %) | 8 MPa / 5 MPa | |

### Glanzgrad nach DIN 57370 / 60 °C:

| | | | | | | |
|---|---|---|---|---|---|---|
| Tiefziehverhältnis | 0 | 1 : 1,8 | 1 : 1,5 | 1 : 1,8 | 1 : 2,5 | 1 : 3 |
| Tiefziehtemperatur | 0 | 170 | 185 | 185 | 185 | 185 |
| Glanzgrad | 0,5 | 1,0 | 1,05 | 1,0 | 1,1 | 1,15 |

Diese Ergebnisse zeigen, daß die Folie matt ist und der Glanzgrad der Folie durch die Thermoformbedingungen nur geringfügig erhöht wird.

### Beispiel 2 (Vergleichsbeispiel)

Eine Mischung aus 100 Gew.-Teilen eines unvernetzten heterophasigen Polypropylen-Blockpolymeren mit einem Elastomeranteil von 50 Gew.-%, davon 25 Gew.-% Ethylen und 25 Gew.-% Propylen und einem MFI 230/2,16 von 0,8 g/10 min einschließlich Stabilisatoren und Farbstoffen wurden auf einer Doppelschnecke bei 240 °C granuliert. Die Folie von 1,50 mm Dicke wurde über eine Breitschlitzdüse bei 240 °C Massetemperatur extrudiert und anschließend unter üblichen Bedingungen geprägt (und gegebenenfalls lackiert).

### An dieser Folie wurden folgende Eigenschaften gemessen nach DIN 52910:

| | | |
|---|---|---|
| - Zugfestigkeit σ | längs | 9,5 MPa |
| | quer | 8,0 MPa |
| | | |
| - Härte ε | | 34 Shore D |
| | | |
| - Dehnung ε | längs | 550 % |
| | quer | 520 % |
| | | |
| - E-Modul (100 %) | längs | 8,2 MPa |
| | quer | 5,8 MPa |

### Glanzgrad nach DIN 57370 60 °C:

| | | |
|---|---|---|
| - Tiefziehverhältnis | 0 | 1 : 1.8 |
| | | |
| - Tiefziehtemperatur | 0 | 170 °C |
| | | |
| - Glanzgrad | 0,5 | 1,0 |

Bei Verformungstemperaturen unter und über 170 °C war eine einwandfreie Thermoverformung nicht mehr möglich.

### Beispiel 3

Eine Mischung aus 65 Gew.-Teilen eines unvernetzten heterophasigen Polypropylen-Blockpolymeren mit einem Elastomeranteil von 56 Gew.-%, davon 28 Gew.-% Ethylen und 28 Gew.-% Propylen und einem MFI 230/2,16 von 0,9 g/10 min. und ein dynamisch vernetztes EPDM-Blend mit einem elastomeren Anteil von 65 Gew.-% mit einer Partikelgröße von 0,5 - 15 µm, einem MFI 230/10 von 15 g/10 min. und einem Kompressionsset nach DIN-53517 bei 70 °C nach 22 h von 53, einschließlich Stabilisator und Füllstoffe wurde auf einer Doppelschnecke bei 240 °C granuliert. Die Folie von 1,40 mm Dicke wird über eine Breitschlitzdüse bei 240 °C Massetemperatur extrudiert und anschließend unter üblichen Bedingungen geprägt (und gegebenenfalls lackiert).

Die Verformungseigenschaften waren mit denen gemäß Beispiel 1 verglichen.

## Patentansprüche

1. Verwendung eines Zusatzes von vernetzten PP-EPDM-Mischungen oder Legierungen in Gewichtsmengen von 20 bis 80 Gew.-Teilen (bezogen auf 100 Gew.-Teile Kunststoff) zu 80 bis 20 Gew.-Teilen Kunststoff auf der Basis von Polyolefin, der mindestens ein unvernetztes heterophasiges PropylenBlockcopolymerisat mit einem Elastomeranteil von 35 bis 75 Gew.-% (bezogen auf 100 Gew.-Teile des unvernetzten heterophasigen Propylen-Blockcopolymerisat) enthält gegebenenfalls in Kombination mit Verarbeitungshilfs-, Zusatzmitteln, Füllstoffen, Farbstoffen und/oder Farbpigmenten zur Herstellung von tiefziehfähigen Kraftfahrzeugfolien, -bahnen oder Kraftfahrzeugfolienschichten mit einer matten und/oder geprägten Folienoberfläche oder Folienoberflächenschicht.

2. Verwendung nach Anspruch 1, dadurch gekennzeichnet, daß der Polypropylen-Block des unvernetzten heterophasigen Polypropylen-Blockpolymerisates aus einem Propylenhomo-, -co- und/oder -blockpolymerisat besteht und der Elastomeranteil des heterophasigen Polypropylen-Blockcopolymerisat 40 bis 70 Gew.-% (bezogen auf 100 Gew.-Teile des unvernetzten heterophasigen Propylen-Blockcopolymerisat) beträgt.

3. Verwendung nach Ansprüchen 1 und 2, dadurch gekennzeichnet, daß das Elastomer des Ethylen-Propylen-Copolymerisates, einen Ethylenanteil von
20 bis 70 Gew.-%, vorzugsweise
30 bis 60 Gew.-%,
und einen Propylenanteil von
80 bis 30 Gew.-%, vorzugsweise
70 bis 40 Gew.-%,
aufweist und ein Molekulargewicht größer als 100.000 besitzt.

4. Verwendung nach einem oder mehreren der Ansprüche 1 bis 3, dadurch gekennzeichnet, daß das heterophasige Propylen-Blockpolymerisat einen MFI 230/2,16
0,3 bis 8, vorzugsweise
0,5 bis 7g/10 min,
beträgt.

5. Verwendung nach einem oder mehreren der Ansprüche 1 bis 4, dadurch gekennzeichnet, daß die Folie in einer Dicke von
300 µm bis 2.000 µm, vorzugsweise
400 µm bis 1.600 µm,
bei Temperaturen von
140 bis 200 °C, vorzugsweise
150 bis 185 °C,
einem Tiefziehvorgang unterworfen wird.

6. Verwendung nach einem oder mehreren der Ansprüche 1 bis 5, dadurch gekennzeichnet, daß die Folie auf eine Polyolefin-Schaumbahn mit einem Raumgewicht von 20 bis 200 g/l und einer mittleren Dicke von 1 bis 5 mm aufkaschiert wird.

## Claims

1. The use of an addition of cross-linked PP-EPDM mixtures or alloys in quantities by weight of 20 to 80 parts by weight (relative to 100 parts by weight plastics material) to 80 to 20 parts by weight plastics material on the basis of polyolefin, which contains at least one non-cross-linked hetero-phase propylene block copolymer having an elastomer content of 35 to 75% by weight (relative to 100 parts by weight of the non-cross-linked hetero-phase propylene block copolymer), optionally in combination with processing aids, additives, fillers, dyes and/or coloured pigments for the production of thermoformable motor vehicle films, webs or motor vehicle film layers with a matt and/or embossed film surface or film surface layer.

2. The use according to Claim 1, characterised in that the polypropylene block of the non-cross-linked hetero-phase polypropylene block polymer consists of a propylene homopolymer, copolymer and/or block polymer and the elastomer content of the hetero-phase polypropylene block copolymer is 40 to 70% by weight (relative to 100 parts by weight of the non-cross-linked hetero-phase propylene block copolymer).

3. The use according to Claims 1 and 2, characterised in that the elastomer of the ethylene propylene copolymer has an ethylene content of
20 to 70% by weight, preferably
30 to 60% by weight,
and a propylene content of
80 to 30% by weight, preferably
70 to 40% by weight,
and has a molecular weight greater than 100,000.

4. The use according to one or more of Claims 1 to 3, characterised in that the hetero-phase propylene block polymer has an MFI 230/2.16 of
0.3 to 8, preferably
0.5 to 7, g/10 min.

5. The use according to one or more of Claims 1 to 4, characterised in that the film is subjected to a thermoforming operation in a thickness of
300 µm to 2,000 µm, preferably
400 µm to 1,600 µm,
at temperatures of
140 to 200°C, preferably
150 to 185°C.

6. The use according to one or more of Claims 1 to 5, characterised in that the film is laminated to a polyolefin foam web having a density of 20 to 200 g/l and an average thickness of 1 to 5 mm.

## Revendications

1. Utilisation d'un additif de mélanges ou d'alliages réticulés de PP-EPDM dans des quantités pondérales de 20-80 parties en poids (rapportées à100 parties en poids de la matière synthétique) à 80-20 parties en poids d'une matière synthétique à base de polyoléfine, qui contient au moins un copolymère séquencé de propylène à phase hétérogène non réticulé contenant une fraction d'élastomère de 35 à 75% en poids (rapportés à 100 parties en poids du copolymère séquencé de propylène à phase hétérogène non réticulé), éventuellement en combinaison avec des adjuvants de traitement, des additifs, des charges, des colorants et/ou des pigments de coloration pour la préparation de feuilles, de bandes ou de couches de feuilles aptes à l'emboutissage, pour des véhicules automobiles, comprenant une surface de feuille ou une couche superficielle de feuille mate et/ou estampée.

2. Utilisation selon la revendication 1, caractérisée en ce que la séquence de polypropylène du polymère séquencé de polypropylène à phase hétérogène non réticulé est constituée par un homopolymère, un copolymère et/ou un polymère séquencé de propylène, et la fraction d'élastomère du copolymère séquencé de polypropylène à phase hétérogène s'élève de 40 à 70% en poids (rapportés à 100 parties en poids du copolymère séquencé de propylène à phase hétérogène non réticulé).

3. Utilisation selon les revendications 1 et 2, caractérisée en ce que l'élastomère du copolymère d'éthylène-propylène présente une fraction d'éthylène de 20 à 70% en poids, de préférence de 30 à 60% en poids, et une fraction de propylène de 80 à 30% en poids, de préférence de 70 à 40% en poids, et possède un poids moléculaire supérieur à 100.000.

4. Utilisation selon l'une ou plusieurs des revendications 1 à 3, caractérisée en ce que le copolymère séquencé de propylène à phase hétérogène présente une valeur MFI 230/2,16 de 0,3 à 8, de préférence de 0,5 à 7 g/10 min.

5. Utilisation selon l'une ou plusieurs des revendications 1 à 4, caractérisée en ce qu'on soumet la feuille possédant une épaisseur de 300 µm à 2.000 µm, de préférence de 400 µm à 1.600 µm à des températures de 140 à 200°C, de préférence de 150 à 185°C, à un procédé d'emboutissage.

6. Utilisation selon une ou plusieurs des revendications 1 à 5, caractérisée en ce que la feuille est contrecollée sur une bande de mousse de polyoléfine présentant un poids spécifique de 20 à 200 g/l et une épaisseur moyenne de 1 à 5 mm.
